# EUROPEAN PATENT APPLICATION

(11) **EP 4 701 253 A1**
(43) Date of publication of application: **25.02.2026**
(21) Application number: 24806343.0
(22) Date of filing: 28.04.2024
(51) Int. Cl.: H04W 12/06

(54) **COMMUNICATION METHOD, APPARATUS, AND SYSTEM**

(30) Priority: 13.05.2023 CN 202310541378
(71) Applicant: Huawei Technologies Co., Ltd., Shenzhen, Guangdong 518129 (CN)
(72) Inventor: LI, Lun, Shenzhen, Guangdong 518129 (CN); LI, He, Shenzhen, Guangdong 518129 (CN); WU, Yizhuang, Shenzhen, Guangdong 518129 (CN); LEI, Ao, Shenzhen, Guangdong 518129 (CN); LIU, Wenfeng, Shenzhen, Guangdong 518129 (CN)
(74) Representative: Maiwald GmbH
(86) International application number: PCT/CN2024/090375
(87) International publication number: WO 2024/234987

(57) **Abstract**

Embodiments of this application provide a communication method. The method includes: A relay UE receives and stores data from a remote UE, obtains a result of authentication performed by a DN on the remote UE, and then processes the data based on the result of the authentication. According to the foregoing technical solutions, when the DN needs to perform authentication on the accessing remote UE, communication efficiency of the remote UE can be improved.

## Description

This application claims priority to Chinese Patent Application No. 202310541378.1, filed with the China National Intellectual Property Administration on May 13, 2023 and entitled "COMMUNICATION METHOD AND APPARATUS, AND SYSTEM", which is incorporated herein by reference in its entirety.

### TECHNICAL FIELD

Embodiments of this application relate to the communication field, and more specifically, to a communication method and apparatus, and a system.

### BACKGROUND

In a 5th generation (5th generation, 5G) communication system, to ensure network security, an operator network needs to perform a primary authentication (primary authentication) procedure on a terminal device that is to access a network, that is, perform identity authentication and authorization on the terminal device. A terminal device can access the operator network only after primary authentication on the terminal device succeeds, and further requests to establish a protocol data unit (protocol data unit, PDU) session to access various services on a data network (data network, DN).

With development of vertical industries and the internet of things, a DN other than an operator network also has an authentication and authorization requirement, that is, a secondary authentication (secondary authentication, SA) requirement, for some terminal devices that are to access the DN. In such an authentication manner, the DN other than the operator network may perform authentication and authorization on the terminal devices through the operator network.

A remote terminal device in a proximity-based service may communicate with the DN via a relay terminal device, to access a service on the DN. When the DN needs to perform secondary authentication on the accessing remote terminal device, how to improve communication efficiency of the remote terminal device is a problem that needs to be considered.

### SUMMARY

Embodiments of this application provide a communication method, to improve communication efficiency of a remote terminal device.

According to a first aspect, a communication method is provided. The method may be performed by a relay terminal device, or may be performed by a component (for example, a chip or a circuit) of the relay terminal device. This is not limited. For ease of description, the following uses an example in which the method is performed by the relay terminal device for description.

It should be noted that the relay terminal device may also be referred to as a relay user equipment (user equipment, UE), and a remote terminal device may also be referred to as a remote UE.

The method includes: receiving and storing data from the remote UE; obtaining a result of authentication performed by a data network on the remote UE, where the data network is configured to provide a service for the remote UE via the relay UE; and processing the data based on the result of the authentication.

According to the foregoing technical solution, the relay UE can process the data of the remote UE in a targeted manner based on the result of the authentication performed by the data network on the remote UE, to improve communication efficiency of the remote UE.

With reference to the first aspect, in some implementations of the first aspect, when the result of the authentication is that the authentication succeeds, processing the data based on the result of the authentication includes: sending the data to the data network. In this way, the relay UE sends the data of the remote UE to the data network after the authentication succeeds, and it can be ensured that the data of the remote UE can be successfully transmitted to a DN side, so that communication efficiency of the remote UE is improved.

With reference to the first aspect, in some implementations of the first aspect, when the result of the authentication is that the authentication fails, processing the data based on the result of the authentication includes: discarding the data. According to the foregoing technical solution, when learning that the result of the authentication on the remote UE is that the authentication fails, the relay UE discards the data of the remote UE, in other words, does not send the data to a DN side. In this way, a waste of transmission resources can be avoided.

With reference to the first aspect, in some implementations of the first aspect, before obtaining the result of the authentication performed by the data network on the remote UE, the method further includes: discarding the data based on a storage policy corresponding to the remote UE. Before sending the data to the data network, the method further includes: sending, to the remote UE, indication information indicating the remote UE to resend the data. In this way, storage resources are saved, and a loss of the data of the remote UE can be avoided.

With reference to the first aspect, in some implementations of the first aspect, before obtaining the result of the authentication performed by the data network on the remote UE, the method further includes: discarding the data based on a storage policy corresponding to the remote UE. Processing the data based on the result of the authentication includes: when the result of the authentication is that the authentication fails, sending, to the remote UE, indication information indicating that the data has been discarded. In this way, storage resources can be saved, and the remote UE clearly knows that the data has been discarded, so that information synchronization can be implemented.

With reference to the first aspect, in some implementations of the first aspect, the method further includes: sending, to the remote UE, indication information indicating a subsequent operation of the remote UE. In this way, the subsequent operation of the remote UE can be clearly indicated, and processing complexity of the remote UE can be reduced.

It should be noted that the subsequent operation of the remote UE may include any one of the following: resending, to the relay UE, a message for requesting direct communication; releasing a connection with the relay UE; or establishing a connection with another relay UE or another data network.

With reference to the first aspect, in some implementations of the first aspect, the storage policy includes any one of the following: discarding the data after a maximum storage capacity is met; discarding the data after maximum storage time is met; and requesting, after maximum storage time is met, the remote UE to indicate a processing policy for the data, where the processing policy includes discarding the data. In this way, utilization of storage resources can be improved.

With reference to the first aspect, in some implementations of the first aspect, obtaining the result of the authentication performed by the data network on the remote UE includes: receiving the result of the authentication from a session management function network element.

According to a second aspect, a communication method is provided. The method may be performed by a relay UE, or may be performed by a component (for example, a chip or a circuit) of the relay UE. This is not limited. For ease of description, the following uses an example in which the method is performed by the relay UE for description.

The method includes: obtaining a result of authentication performed by a data network on a remote UE, where the data network is configured to provide a service for the remote UE via the relay UE; and when the result of the authentication is that the authentication succeeds, sending a first message to the remote UE, where the first message indicates that a direct communication connection between the relay UE and the remote UE is successfully established, and the first message is further for triggering the remote UE to send data.

It should be noted that the first message being further for triggering the remote UE to send the data may be understood as that, after the remote UE receives the first message, in other words, after the direct communication connection between the relay UE and the remote UE is successfully established, the remote UE may send the data to the relay UE when the remote UE needs to send the data.

According to the foregoing technical solution, when learning that the result of the authentication on the remote UE is that the authentication succeeds, the relay UE triggers the remote UE to send the data, so that the data of the remote UE can be successfully transmitted to a DN side, to improve communication efficiency of the remote UE.

With reference to the second aspect, in some implementations of the second aspect, before obtaining the result of the authentication performed by the data network on the remote UE, the method further includes: determining that the authentication needs to be performed on the remote UE. Optionally, the method further includes: triggering a session management function network element to initiate the authentication; and receiving, from the session management function network element, the result of the authentication performed by the data network on the remote UE. In this way, when determining that the authentication needs to be performed on the remote UE, the relay UE can trigger the session management function network element to initiate the authentication, to improve system processing efficiency.

With reference to the second aspect, in some implementations of the second aspect, before determining that the authentication needs to be performed on the remote UE, the method further includes: obtaining subscription data of the remote UE. Determining that the authentication needs to be performed on the remote UE includes: determining, based on the subscription data, that the authentication needs to be performed on the remote UE, for example, determining, based on a result of comparison between the subscription data with subscription data of the relay UE, that the authentication needs to be performed on the remote UE. In this way, the relay UE can accurately determine, based on the subscription data of the remote UE, that the authentication needs to be performed on the remote UE, to improve accuracy of determining that the authentication needs to be performed on the remote UE.

With reference to the second aspect, in some implementations of the second aspect, before determining that the authentication needs to be performed on the remote UE, the method further includes: receiving, from the remote UE, indication information indicating that the authentication needs to be performed on the remote UE. Determining that the authentication needs to be performed on the remote UE includes: determining, based on the indication information indicating that the authentication needs to be performed on the remote UE, that the authentication needs to be performed on the remote UE. In this way, the relay UE quickly and accurately learns, based on an indication sent by the remote UE, that the authentication needs to be performed on the remote UE.

According to a third aspect, a communication method is provided. The method may be performed by a relay UE, or may be performed by a component (for example, a chip or a circuit) of the relay UE. This is not limited. For ease of description, the following uses an example in which the method is performed by the relay UE for description.

The method includes: sending, to a remote UE, indication information indicating the remote UE to avoid sending data; obtaining a result of authentication performed by a data network on the remote UE, where the data network is configured to provide a service for the remote UE via the relay UE; and when the result of the authentication is that the authentication fails, sending, to the remote UE, indication information indicating the remote UE to perform a subsequent operation.

It should be noted that the subsequent operation of the remote UE may include any one of the following: resending a direct communication request message to the relay UE; releasing a connection with the relay UE; or attempting to establish a connection with another relay UE or another data network.

According to the foregoing technical solution, before obtaining the result of the authentication performed by the DN on the remote UE, the relay UE sends, to the remote UE, the indication information indicating the remote UE to avoid sending the data. When learning that the result of the authentication on the remote UE is that the authentication fails, the relay UE sends the indication information indicating the remote UE to perform the subsequent operation. In this way, communication efficiency of the remote UE is improved, and a waste of transmission resources is reduced.

With reference to the third aspect, in some implementations of the third aspect, before receiving the result of the authentication from a session management function network element, the method further includes: determining that the authentication needs to be performed on the remote UE. In this way, the relay UE can accurately determine that the authentication needs to be performed on the remote UE, to improve accuracy of determining that the authentication needs to be performed on the remote UE.

With reference to the third aspect, in some implementations of the third aspect, after determining that the authentication needs to be performed on the remote UE, the method further includes: triggering the session management function network element to initiate the authentication. Obtaining the result of the authentication performed by the data network on the remote UE includes: receiving, from the session management function network element, the result of the authentication performed by the data network on the remote UE. In this way, the relay UE can accurately determine that the authentication needs to be performed on the remote UE, to improve accuracy of determining that the authentication needs to be performed on the remote UE.

With reference to the third aspect, in some implementations of the third aspect, before determining that the authentication needs to be performed on the remote UE, the method further includes: obtaining subscription data of the remote UE. Determining that the authentication needs to be performed on the remote UE includes: determining, based on the subscription data, that the authentication needs to be performed on the remote UE. In this way, the relay UE can accurately determine, based on the subscription data of the remote UE, that the authentication needs to be performed on the remote UE, to improve accuracy of determining that the authentication needs to be performed on the remote UE.

With reference to the third aspect, in some implementations of the third aspect, determining, based on the subscription data, that the authentication needs to be performed on the remote UE includes: determining, based on a result of comparison between the subscription data and subscription data of the relay UE, that the authentication needs to be performed on the remote UE. In this way, the relay UE can accurately determine, based on the result of the comparison between the subscription data of the relay UE and the subscription data of the remote UE, that the authentication needs to be performed on the remote UE, to improve accuracy of determining that the authentication needs to be performed on the remote UE.

With reference to the third aspect, in some implementations of the third aspect, before determining that the authentication needs to be performed on the remote UE, the method further includes: receiving, from the remote UE, indication information indicating that the authentication needs to be performed on the remote UE. Determining that the authentication needs to be performed on the remote UE includes: determining, based on the indication information indicating that the authentication needs to be performed on the remote UE, that the authentication needs to be performed on the remote UE. In this way, the relay UE can accurately determine, based on the indication information, that the authentication needs to be performed on the remote UE, to improve accuracy of determining that the authentication needs to be performed on the remote UE.

According to a fourth aspect, a communication method is provided. The method includes: sending, by a remote terminal device, data to a relay terminal device; receiving and storing, by the relay UE, the data from the remote UE; obtaining, by the relay UE, a result of authentication performed by a data network on the remote UE, where the data network is configured to provide a service for the remote UE via the relay UE; and processing, by the relay UE, the data based on the result of the authentication.

With reference to the fourth aspect, in some implementations of the fourth aspect, when the result of the authentication is that the authentication succeeds, processing, by the relay UE, the data based on the result of the authentication includes: sending, by the relay UE, the data to the data network.

With reference to the fourth aspect, in some implementations of the fourth aspect, when the result of the authentication is that the authentication fails, processing, by the relay UE, the data based on the result of the authentication includes: discarding the data.

With reference to the fourth aspect, in some implementations of the fourth aspect, before obtaining, by the relay UE, the result of the authentication performed by the data network on the remote UE, the method further includes: discarding, by the relay UE, the data based on a storage policy corresponding to the remote UE. Before sending, by the relay UE, the data to the data network, the method further includes: sending, by the relay UE to the remote UE, indication information indicating the remote UE to resend the data; and resending, by the remote terminal device, the data to the relay terminal device.

With reference to the fourth aspect, in some implementations of the fourth aspect, before obtaining, by the relay UE, the result of the authentication performed by the data network on the remote UE, the method further includes: discarding, by the relay UE, the data based on a storage policy corresponding to the remote UE. Processing, by the relay UE, the data based on the result of the authentication includes: when the result of the authentication is that the authentication fails, sending, by the relay UE to the remote UE, indication information indicating that the data has been discarded.

According to a fifth aspect, a communication method is provided. The method includes: obtaining, by a relay UE, a result of authentication performed by a data network on a remote UE, where the data network is configured to provide a service for the remote UE via the relay UE; when the result of the authentication is that the authentication succeeds, sending, by the relay UE, a first message to the remote UE, where the first message indicates that a direct communication connection between the relay UE and the remote UE is successfully established; and sending, by the remote UE, data to the relay UE.

It should be noted that the first message being further for triggering the remote UE to send the data may be understood as that, after the remote UE receives the first message, in other words, after the direct communication connection between the relay UE and the remote UE is successfully established, the remote UE may send the data to the relay UE when the remote UE needs to send the data.

With reference to the fifth aspect, in some implementations of the fifth aspect, before obtaining, by the relay UE, the result of the authentication performed by the data network on the remote UE, the method further includes: determining, by the relay UE, that the authentication needs to be performed on the remote UE.

With reference to the fifth aspect, in some implementations of the fifth aspect, after determining, by the relay UE, that the authentication needs to be performed on the remote UE, the method further includes: triggering, by the relay UE, a session management function network element to initiate the authentication. Obtaining, by the relay UE, the result of the authentication performed by the data network on the remote UE includes: receiving, by the relay UE from the session management function network element, the result of the authentication performed by the data network on the remote UE.

According to a sixth aspect, a communication apparatus is provided. The communication apparatus includes a transceiver unit, a storage unit, and a processing unit. The transceiver unit is configured to receive data from a remote UE. The storage unit is configured to store the data from the remote UE. The processing unit is configured to obtain a result of authentication performed by a data network on the remote UE, where the data network is configured to provide a service for the remote UE via a relay UE. The processing unit is further configured to process the data based on the result of the authentication.

With reference to the sixth aspect, in some implementations of the sixth aspect, when the result of the authentication is that the authentication succeeds, the processing unit is specifically configured to send the data to the data network.

With reference to the sixth aspect, in some implementations of the sixth aspect, when the result of the authentication is that the authentication fails, the processing unit is specifically configured to discard the data.

With reference to the sixth aspect, in some implementations of the sixth aspect, before the result of the authentication performed by the data network on the remote UE is obtained, the processing unit is further configured to discard the data based on a storage policy corresponding to the remote UE. Before the data is sent to the data network, the transceiver unit is further configured to send, to the remote UE, indication information indicating the remote UE to resend the data.

With reference to the sixth aspect, in some implementations of the sixth aspect, before the result of the authentication performed by the data network on the remote UE is obtained, the processing unit is further configured to discard the data based on a storage policy corresponding to the remote UE. The transceiver unit is specifically configured to: when the result of the authentication is that the authentication fails, send, to the remote UE, indication information indicating that the data has been discarded.

With reference to the sixth aspect, in some implementations of the sixth aspect, the transceiver unit is further configured to send, to the remote UE, indication information indicating a subsequent operation of the remote UE.

With reference to the sixth aspect, in some implementations of the sixth aspect, the storage policy includes any one of the following: discarding the data after a maximum storage capacity is met; discarding the data after maximum storage time is met; and requesting, after maximum storage time is met, the remote UE to indicate a processing policy for the data, where the processing policy includes discarding the data.

According to a seventh aspect, a communication apparatus is provided. The communication apparatus includes a processing unit and a transceiver unit. The processing unit is configured to obtain a result of authentication performed by a data network on a remote UE, where the data network is configured to provide a service for the remote UE via a relay UE. The transceiver unit sends, when the result of the authentication is that the authentication succeeds, a first message to the remote UE, where the first message indicates that a direct communication connection between the relay UE and the remote UE is successfully established, and the first message is further for triggering the remote UE to send data.

With reference to the seventh aspect, in some implementations of the seventh aspect, before the result of the authentication performed by the data network on the remote UE is obtained, the transceiver unit is further configured to send, to the remote UE, indication information indicating the remote UE to avoid sending the data.

With reference to the seventh aspect, in some implementations of the seventh aspect, before the result of the authentication performed by the data network on the remote UE is obtained, the processing unit is further configured to determine that the authentication needs to be performed on the remote UE.

With reference to the seventh aspect, in some implementations of the seventh aspect, after it is determined that the authentication needs to be performed on the remote UE, the transceiver unit is further configured to trigger a session management function network element to initiate the authentication. The processing unit is specifically configured to receive, from the session management function network element, the result of the authentication performed by the data network on the remote UE. According to the foregoing technical solution, the relay UE can accurately determine that the authentication needs to be performed on the remote UE, and trigger the session management function network element to initiate the authentication, to improve accuracy of determining that the authentication needs to be performed on the remote UE.

With reference to the seventh aspect, in some implementations of the seventh aspect, before it is determined that the authentication needs to be performed on the remote UE, the processing unit is further configured to obtain subscription data of the remote UE. The processing unit is specifically configured to determine, based on the subscription data, that the authentication needs to be performed on the remote UE.

With reference to the seventh aspect, in some implementations of the seventh aspect, the processing unit is specifically configured to determine, based on a result of comparison between the subscription data and subscription data of the relay UE, that the authentication needs to be performed on the remote UE.

With reference to the seventh aspect, in some implementations of the seventh aspect, before it is determined that the authentication needs to be performed on the remote UE, the transceiver unit is further configured to receive, from the remote UE, indication information indicating that the authentication needs to be performed on the remote UE. The processing unit is specifically configured to determine, based on the indication information indicating that the authentication needs to be performed on the remote UE, that the authentication needs to be performed on the remote UE.

According to an eighth aspect, a communication apparatus is provided. The communication apparatus includes a transceiver unit and a processing unit. The transceiver unit is configured to send, to a remote UE, indication information indicating the remote UE to avoid sending data. The processing unit is configured to obtain a result of authentication performed by a data network on the remote UE, where the data network is configured to provide a service for the remote UE via a relay UE. The transceiver unit is further configured to: when the result of the authentication is that the authentication fails, send, to the remote UE, indication information indicating the remote UE to perform a subsequent operation.

With reference to the eighth aspect, in some implementations of the eighth aspect, before the result of the authentication performed by the data network on the remote UE is obtained, the processing unit is further configured to determine that the authentication needs to be performed on the remote UE.

With reference to the eighth aspect, in some implementations of the eighth aspect, after it is determined that the authentication needs to be performed on the remote UE, the processing unit is further configured to trigger a session management function network element to initiate the authentication. The processing unit is specifically configured to receive, from the session management function network element, the result of the authentication performed by the data network on the remote UE.

With reference to the eighth aspect, in some implementations of the eighth aspect, before it is determined that the authentication needs to be performed on the remote UE, the processing unit is further configured to obtain subscription data of the remote UE. The processing unit is specifically configured to determine, based on the subscription data, that the authentication needs to be performed on the remote UE.

With reference to the eighth aspect, in some implementations of the eighth aspect, the processing unit is specifically configured to determine, based on a result of comparison between the subscription data and subscription data of the relay UE, that the authentication needs to be performed on the remote UE.

With reference to the eighth aspect, in some implementations of the eighth aspect, before it is determined that the authentication needs to be performed on the remote UE, the transceiver unit is further configured to receive, from the remote UE, indication information indicating that the authentication needs to be performed on the remote UE. The processing unit is specifically configured to determine, based on the indication information indicating that the authentication needs to be performed on the remote UE, that the authentication needs to be performed on the remote UE.

According to a ninth aspect, a communication apparatus is provided. The communication apparatus includes a memory and a processor. The memory is configured to store instructions. The processor is configured to execute the instructions stored in the memory. In addition, the execution of the instructions stored in the memory enables the processor to perform the method according to any one of the possible implementations of the first aspect, the second aspect, or the third aspect.

According to a tenth aspect, a computer-readable medium is provided. The computer-readable medium stores a computer program (which may also be referred to as code or instructions). When the computer program is run on a computer, the computer is enabled to perform the method according to any one of the possible implementations of the first aspect, the second aspect, or the third aspect.

According to an eleventh aspect, a chip system is provided, and includes a processor, configured to invoke a computer program from a memory and run the computer program, to enable a communication apparatus on which the chip system is installed performs the method according to any one of the possible implementations of the first aspect, the second aspect, or the third aspect.

According to a twelfth aspect, a computer program product is provided. The computer program product includes instructions. When the instructions are executed, a communication apparatus is enabled to perform the method according to any one of the possible implementations of the first aspect, the second aspect, or the third aspect.

According to a thirteenth aspect, a communication system is provided. The communication system includes the communication apparatus according to any one of the possible implementations of the fourth aspect, the fifth aspect, or the sixth aspect.

For example, the communication system includes the communication apparatus according to any one of the possible implementations of the sixth aspect, the seventh aspect, or the eighth aspect. The communication apparatus may be a relay UE. Optionally, the communication system further includes a remote UE.

### BRIEF DESCRIPTION OF DRAWINGS

(a) in FIG. 1 and (b) in FIG. 1 are diagrams of a network architecture to which an embodiment of this application is applicable;
FIG. 2 is a schematic flowchart of a communication method 200 according to an embodiment of this application;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a block diagram of a communication apparatus 700 according to an embodiment of this application;
FIG. 8 is a block diagram of a communication apparatus 800 according to an embodiment of this application; and
FIG. 9 is a diagram of a structure of an apparatus 900 according to an embodiment of this application.

### DESCRIPTION OF EMBODIMENTS

The following describes technical solutions of this application with reference to the accompanying drawings.

The technical solutions provided in this application may be applied to various communication systems, for example, to a 5th generation (5th Generation, 5G) mobile communication system or a new radio (new radio, NR) access technology. The 5G mobile communication system may include non-standalone (non-standalone, NSA) networking and/or standalone (standalone, SA) networking.

The technical solutions provided in this application may be applied to any scenario in which a terminal device establishes a plurality of protocol data unit (protocol data unit, PDU) sessions.

The technical solutions provided in this application may be further applied to machine type communication (machine type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as vehicle-to-X (vehicle-to-X, V2X, where X can stand for everything). For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

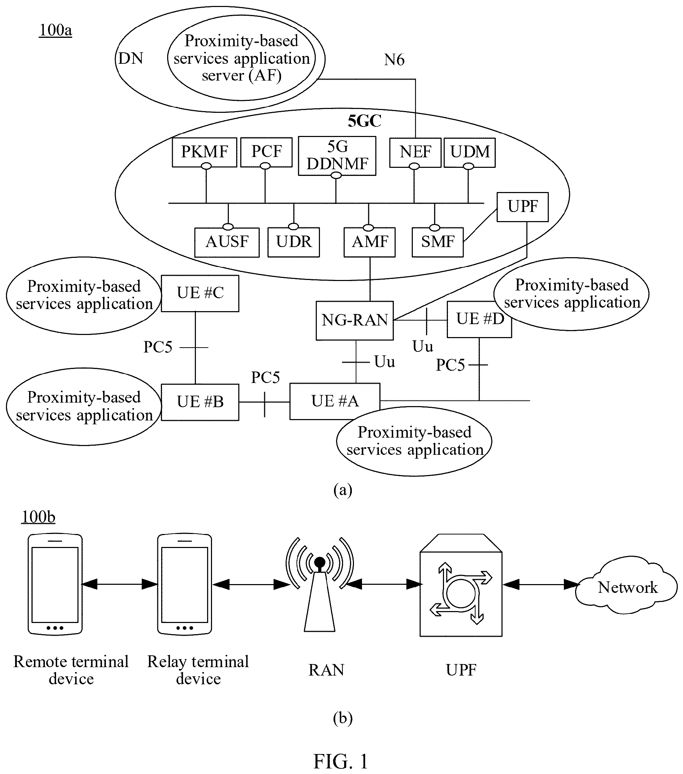

(a) in FIG. 1 is a diagram of a network architecture applicable to a method according to embodiments of this application. As shown in the figure, the network architecture may specifically include the following network elements.
1. User equipment (user equipment, UE): The user equipment may be referred to as a terminal device, a terminal, an access terminal, a subscriber unit, a subscriber station, a mobile station, a remote station, a remote terminal, a mobile device, a user terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, an uncrewed aerial vehicle, a wearable device, a terminal device in a 5G network, a terminal device in an evolved public land mobile network (public land mobile network, PLMN), or the like. This is not limited in embodiments of this application. The UE may be connected to a next generation radio access network (next generation radio access network, NG-RAN) device through an interface. For example, a UE #A and a UE #D shown in (a) in FIG. 1 are connected to the NG-RAN through Uu interfaces. Two UEs having a proximity-based services application (proximity-based services application, ProSe application) function may be connected to each other through an interface. For example, as shown in (a) in FIG. 1, the UE #A and a UE #B are connected to each other through a PC5 interface, the UE #B and a UE #C are connected to each other through a PC5 interface, and the UE #A and the UE #D are connected through a PC5 interface. It should be noted that the PC5 interface may be any interface having a direct communication function, in other words, the PC5 interface herein may be understood as a direct communication interface.
2. Access network (access network, AN): The access network provides a network access function for an authorized user in a specific area, and can use transmission tunnels with different quality based on user levels, service requirements, and the like. The access network may be an access network using different access technologies. A current access network technology includes a radio access network technology used in a 3rd generation (3rd generation, 3G) system, a radio access network technology used in a 4G system, an NG-RAN technology shown in (a) in FIG. 1 (for example, a radio access technology used in a 5G system), or the like.

An access network that implements an access network function based on a wireless communication technology may be referred to as a radio access network (radio access network, RAN). The radio access network can manage radio resources, provide an access service for a terminal, and further complete forwarding of a control signal and user data between a terminal and a core network.

A radio access network device may be, for example, a NodeB (NodeB), an evolved NodeB (evolved NodeB, eNB or eNodeB), a next generation NodeB (next generation NodeB, gNB) in a 5G mobile communication system, a base station in a mobile communication system, an access point (access point, AP) in a Wi-Fi wireless hotspot (Wi-Fi) system, or the like, or may be a radio controller in a cloud radio access network (cloud radio access network, CRAN) scenario. Alternatively, the radio access network device may be a relay station, an access point, a vehicle-mounted device, an uncrewed aerial vehicle, a wearable device, a network device in a 5G network, a network device in an evolved PLMN, or the like. A specific technology and a specific device form that are used by the radio access network device are not limited in embodiments of this application.

3. Session management network element: The session management network element is mainly configured for session management, assignment and management of an internet protocol (internet protocol, IP) address of a user equipment, selection and management of an endpoint of a user plane function interface and a policy control and charging function interface, downlink data notification, and the like.

4. Data network element: The data network element is configured to provide a network for data transmission.

5. ProSe application server (application server, AS): The ProSe application server may be an application function (application function, AF) of a DN, or may be an AS that provides a ProSe service. An AF having a ProSe application server function has all functions of an AF defined in 23.501 R-15 and have a related function for a ProSe service. In other words, in a user plane architecture, the ProSe application server performs user plane communication with a UE through a UE-RAN-UPF-AF path. The ProSe application server may alternatively communicate with another network function (network function, NF) in a 5G core network (5G core network, 5GC) via an NEF in a control plane architecture, for example, communicate with a PCF via the NEF. If the ProSe application server is an AF of the DN, and the AF is deployed by an operator of the 5GC, the ProSe application server may alternatively directly communicate with another NF in the 5GC without via an NEF in a control plane architecture, for example, directly communicate with the PCF.

6. 5G direct discovery name management function (direct discovery name management function, DDNMF): The 5G direct discovery name management function has a function of allocating and processing a mapping relationship between a proximity-based services application identifier (ProSe application identifier) and a proximity-based services application code (ProSe application code) for open proximity-based services discovery (open ProSe discovery). In restricted proximity-based services discovery (restricted ProSe direct discovery), the 5G DDNMF may communicate with a proximity-based services application server through a PC2 interface, to process authorization of a discovery request (discovery request), and also has a function of not allocating and processing a mapping relationship between an application identifier (application identifier) and codes used in restricted proximity-based services, where the codes used in the restricted proximity-based services include a proximity-based services restricted code (ProSe restricted code), a proximity-based services query code (ProSe query code), and a proximity-based services response code (ProSe response code).

In current standard definition, the 5G DDNMF is at a PLMN granularity. In other words, one PLMN has only one 5G DDNMF. One 5G DDNMF may be uniquely determined based on a mobile country code (mobile country code, MCC) and a mobile network code (mobile network code, MNC).

7. Authentication server function (authentication server function, AUSF): The authentication server function is a network element for performing authentication and authorization on a user.

8. Proximity-based services key management function (ProSe key management function, PKMF): The proximity-based services key management function may be responsible for generating and distributing, for a UE that uses proximity-based services, a key used for a PC5 interface connection. The UE needs to interact with the PKMF via a control plane, to obtain the key used for the PC5 interface.

It may be understood that the foregoing network elements or functions may be network elements in a hardware device, software functions running on dedicated hardware, or virtualized functions instantiated on a platform (for example, a cloud platform). The foregoing network elements or functions may be implemented by one device, may be jointly implemented by a plurality of devices, or may be a functional module in one device. This is not specifically limited in embodiments of this application.

It should be further understood that the network architecture applicable to embodiments of this application shown in (a) in FIG. 1 is merely an example for description, and the network architecture applicable to embodiments of this application is not limited thereto. Any network architecture that can implement functions of the network elements is applicable to embodiments of this application.

For example, in some network architectures, network function network element entities such as an AMF, an SMF network element, a PCF network element, and a UDM network element are all referred to as network function (network function, NF) network elements. Alternatively, in some other network architectures, a set of network elements such as an AMF, an SMF network element, a PCF network element, and a UDM network element may be referred to as control plane function network elements. Because a UE needs to interact with a PKMF and a DDNMF via a user plane, network elements such as the PKMF and the DDNMF may be referred to as user plane network elements.

It should be further understood that the foregoing names are defined merely for distinguishing between different functions, and should not constitute any limitation on this application. This application does not exclude a possibility that another name is used in a 5G network and another future network. For example, in a 6G network, a part or all of the foregoing network elements may still use terms in 5G, or may use other names. A name of an interface between the network elements in FIG. 1 is merely an example. In specific implementation, the name of the interface may be another name. This is not specifically limited in this application. In addition, names of messages (or signaling) transmitted between the foregoing network elements are also merely examples, and do not constitute any limitation on functions of the messages.

(b) in FIG. 1 is a diagram of another communication system architecture according to an embodiment of this application. When a remote terminal device is located outside network coverage, or signal quality between the remote terminal device and an access network device is poor (for example, lower than a preset threshold), the remote terminal device may be assisted by a relay terminal device, and communication between the remote terminal device and the access network device is implemented through communication between the remote terminal device and the relay terminal device and communication between the relay terminal device and the access network device. For example, as shown in (b) in FIG. 1, the remote terminal device may communicate with a RAN via the relay terminal device.

With rapid development of mobile communication, universal use of new types of services, for example, data services such as a video service and virtual reality (virtual reality, VR)/augmented reality (augmented reality, AR) increase bandwidth requirements of users. D2D communication allows direct communication between UEs, and the UEs may share spectrum resources with cell users under control of a cell network, so that utilization of the spectrum resources is effectively improved. Currently, the D2D communication has been applied to 4G and 5G network systems, and is collectively referred to as proximity-based services (proximity-based services, ProSe) communication.

When a UE is outside network coverage, or a communication signal between the UE and a RAN is poor, a remote UE (Remote UE) may perform communication with assistance of a relay UE (Relay UE). To be specific, the remote UE obtains a service through communication between the remote UE and the relay UE and communication between the relay UE and a mobile network. Communication between the UE outside the network coverage and the network may be supported in an extension manner by establishing a communication mode from the remote UE to the relay UE to the network. A communication mode from the remote UE to the relay UE to the network may be referred to as UE-to-network relay (UE-to-network relay) communication.

To facilitate understanding of embodiments of this application, terms used in this application are first briefly described.

### 1. Protocol data unit (protocol data unit, PDU) session (PDU session)

A 5G core network (5G core network, 5GC) supports a PDU connectivity service. The PDU connection service may be a service of exchanging PDU data packets between a terminal device and a DN. The PDU connection service is implemented by establishing a PDU session initiated by the terminal device. A PDU session is established means that a data transmission path between the terminal device and the DN is established. In other words, the PDU session is at a UE-level. Each terminal device may establish one or more PDU sessions. The terminal device may access the DN by using the PDU session established between the terminal device and the DN.

As described above, the SMF is mainly responsible for session management in a mobile network. The PDU session may be established, modified, or released between the terminal device and the SMF through NAS session management (session management, SM) signaling.

### 2. Secondary authentication

In terms of network security, a primary task of a network includes: performing identity authentication and authorization on terminals that access the network. A terminal device can access a 3GPP network only after being authenticated, and further request to establish a PDU session to access various services on a DN.

In a current 4G network, authentication and authorization of a terminal device are directly performed by an operator network. In 5G standardization, this type of authentication method is referred to as primary authentication (Primary Authentication), or may be referred to as first-level authentication. With development of vertical industries and internet of things, it can be envisioned that a DN other than an operator network also has an authentication and authorization requirement for a terminal device that is to access the DN (although the terminal device accesses the DN through the operator network). To meet this requirement, the 3GPP defines a new authentication manner in 5G security standardization, which is referred to as secondary authentication (secondary authentication, SA), or may be referred to as second-level authentication. In this authentication manner, a data network other than the operator network may authenticate or authorize the terminal device through the operator network.

After the terminal device accesses the operator network, and first-level authentication performed between the terminal device and the operator network succeeds, if the terminal device needs to access a DN, the terminal device establishes a PDU session with the operator network. In a process in which the terminal device establishes the PDU session with the network, second-level authentication is performed between the terminal device and an authentication server (namely, an authentication network element) corresponding to the DN. The authentication server corresponding to the DN includes a network element configured to perform secondary authentication. Establishment of the PDU session may be triggered by the terminal device or a core network (core network, CN) of the operator network. During or after establishment of the PDU session, the operator network initiates a secondary authentication procedure. For example, the terminal device may send an authentication request to the operator network, and the operator network may forward the authentication request to the authentication server corresponding to the DN, so that the authentication server corresponding to the DN performs authentication and/or authorization between the DN and the terminal device. The authentication server corresponding to the DN (for example, an authentication server of the DN for short) may be, for example, an authentication, authorization, and accounting (authentication, authorization, and accounting, AAA) server (server) (AAA server). A result of authentication and/or authorization performed on the terminal device by the authentication server corresponding to the DN is sent to the operator network, and the operator network determines, based on the result, whether to establish a corresponding PDU session connection for the terminal device.

In a possible implementation, when the DN needs to perform authentication on the accessing remote user equipment (remote user equipment, Remote UE), there may be a problem that data of the remote UE cannot be normally transmitted to a DN side. For example, when the DN does not complete authentication and authorization on the remote UE, the remote UE directly sends data to the DN. Consequently, the data of the remote UE cannot be successfully transmitted to the DN side, and communication efficiency of the remote UE is reduced.

In view of this, embodiments of this application provide a communication method, to ensure that data of a remote UE is successfully transmitted to a DN side, and improve communication efficiency of the remote UE.

To facilitate understanding, authentication is uniformly used for replacing secondary authentication (SA) in the following descriptions.

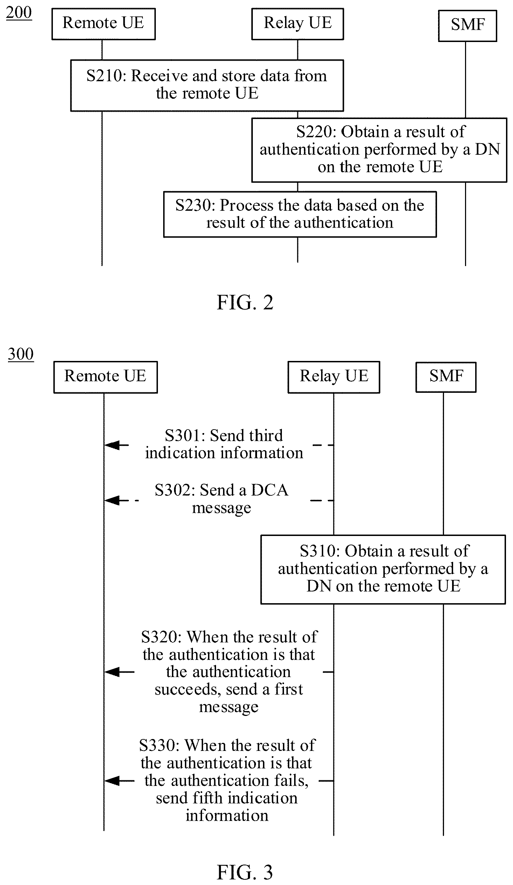

FIG. 2 is a schematic flowchart of a communication method 200 according to an embodiment of this application. As shown in FIG. 2, the method is performed by a relay UE (Relay UE), and the method may include at least the following steps.

S210: The relay UE receives and stores data from a remote UE.

Specifically, in step S210, the remote UE sends the data to the relay UE, and correspondingly, the relay UE receives the data sent by the remote UE, and stores the data from the remote UE.

It should be noted that the stored data may also be understood as buffered (cached/buffered) data, temporarily stored data, or transiently stored data. It should be understood that this is not limited in this application.

S220: The relay UE obtains a result of authentication performed by a DN on the remote UE.

Specifically, a data network may be the DN. The DN is configured to provide a service for the remote UE via the relay UE. The result of the authentication performed by the DN on the remote UE is mainly a result of authentication and authorization performed by the DN on the remote UE that accesses the DN. It may be understood that the result of the authentication performed by the DN on the remote UE is specifically a result of secondary authentication. The result of the authentication performed by the DN on the remote UE may be that the authentication succeeds, or may be that the authentication fails, or may be that no authentication needs to be performed on the remote UE.

It should be noted that, for a specific authentication procedure, refer to the foregoing descriptions and an existing protocol. Details are not described herein again in this application. For ease of understanding, in the following descriptions, the result of the authentication on the remote UE is uniformly used for replacing the result of the authentication performed by the DN on the remote UE and the result of the secondary authentication.

It should be further noted that a manner in which the relay UE obtains the result of the authentication performed by the DN on the remote UE may be: The relay UE receives the result that is of the authentication performed by the remote UE and that is sent by an SMF.

S230: The relay UE processes the data based on the result of the authentication.

Optionally, in a possible implementation, when the result of the authentication on the remote UE is that the authentication succeeds, the relay UE sends the data of the remote UE to the DN.

Optionally, in a possible implementation, when the result of the authentication on the remote UE is that the authentication fails, the relay UE discards the data of the remote UE.

Optionally, in a possible implementation, when the result of the authentication on the remote UE is that no authentication needs to be performed, the relay UE sends the data of the remote UE to the DN.

Optionally, in a possible implementation, when the relay UE does not receive, within a period of time indicated by a timer, the result that is of the authentication on the remote UE and that is sent by the SMF, in other words, when the relay UE does not obtain, within the period of time indicated by the timer, the result of the authentication performed by the DN on the remote UE, the relay UE discards the data of the remote UE.

Optionally, in a possible implementation, before step S220 is performed, the method may further include: The relay UE discards the data based on a storage policy corresponding to the remote UE.

Specifically, the relay UE pre-configures (pre-configures) corresponding storage policies for remote UEs identified by different identity information, as shown in Table 1. Table 1 is a storage policy table provided in this embodiment of this application. It can be learned from Table 1 that the storage policy table includes the identity information of the remote UEs and the corresponding storage policies.

**Table 1 Storage policy table**

| Number | Identity information of a remote UE | Maximum storage capacity | Maximum storage time | Policy | Whether the policy has been executed |
|---|---|---|---|---|---|
| 1 | SUPI1=1254a34b | 10 MB | 1000 ms | Discard after the maximum storage capacity is met | False |
| 2 | 5G PRUK ID1=239570a4bc 93e27459 | 10 MB | 1000 ms | Discard after the maximum storage capacity is met | False |
| 3 | Internet protocol (internet protocol, IP) address: 10.13.2.1 | 10 MB | 1000 ms | Discard after the maximum storage time is met | False |
| 4 | IP address: 10.13.2.4 | 100 MB | 10 ms | Discard after the maximum storage time is met | False |
| 5 | IP address: 2001:1ab0:4e11:4 8::13 | 100 MB | 10 ms | Indicate a peer end after the maximum storage time is met | True |
| 6 | [Default] another UE ID | - | - | Directly discard | False |

It should be noted that the storage policy table may also be referred to as a configuration (configuration) table of the relay UE. It should be understood that this is not limited in embodiments of this application.

For example, as shown in Table 1, when an identity of a remote UE1 is SUPI1 (for example, SUPI1=1254a34b), for the remote UE1, a maximum storage capacity for data storage that is allowed by the relay UE is 10 MB, and maximum storage time for data storage that is allowed by the relay UE is 1000 ms. In addition, a storage policy that is set by the relay UE for the remote UE1 is discarding data of the remote UE1 after the maximum storage capacity is met.

Optionally, in a possible implementation, the relay UE discards the data of the remote UE1 based on the storage policy corresponding to the remote UE1. When the relay UE obtains a result of authentication on the remote UE1 is that the authentication succeeds, the relay UE sends first indication information to the remote UE1, where the first indication information indicates the remote UE1 to resend the data.

Optionally, in a possible implementation, the relay UE discards the data of the remote UE1 based on the storage policy corresponding to the remote UE1. When the relay UE obtains a result of authentication on the remote UE1 is that the authentication fails, the relay UE sends second indication information to the remote UE1, where the second indication information indicates, to the remote UE1, that the data has been discarded. Optionally, the second indication information may further include a cause value for discarding the data.

Optionally, in a possible implementation, the relay UE does not discard the data of the remote UE1 based on the storage policy of the remote UE1. When the relay UE obtains a result of authentication on the remote UE1 is that the authentication succeeds, the relay UE sends the data of the remote UE1 to the DN.

Optionally, in a possible implementation, the relay UE does not discard the data of the remote UE1 based on the storage policy of the remote UE1. When the relay UE obtains a result of authentication on the remote UE1 is that the authentication fails, the relay UE discards the data of the remote UE1, and sends second indication information to the remote UE1, where the second indication information indicates, to the remote UE1, that the data has been discarded. Optionally, the second indication information may further include a cause value for discarding the data.

For another example, as shown in Table 1, when an identity of a remote UE2 is 5G PRUKID1 (for example, 5G PRUK ID1=239570a4bc93e27459), for the remote UE2, a maximum storage capacity for data storage that is allowed by the relay UE is 10 MB, and maximum storage time for data storage that is allowed by the relay UE is 1000 ms. In addition, a storage policy that is set by the relay UE for the remote UE2 is discarding data of the remote UE2 after the maximum storage capacity is met.

It should be noted that, for content of processing the data based on the storage policy and a result of authentication on the remote UE2, refer to the foregoing descriptions of the possible implementations related to the remote UE1. Details are not described herein again.

For another example, when an identity of a remote UE3 is an IP address (for example, 10.13.2.1), for the remote UE3, a maximum storage capacity for data storage that is allowed by the relay UE is 10 MB, and maximum storage time for data storage that is allowed by the relay UE is 1000 ms. In addition, a storage policy that is set by the relay UE for the remote UE3 is discarding data of the remote UE3 after the maximum storage time is met.

For another example, when an identity of a remote UE4 is an IP address (for example, 10.13.2.4), for the remote UE4, a maximum storage capacity for data storage that is allowed by the relay UE is 100 MB, and maximum storage time for data storage that is allowed by the relay UE is 10 ms. In addition, a storage policy that is set by the relay UE for the remote UE4 is discarding data of the remote UE4 after the maximum storage time is met.

It should be noted that, for content of processing the data based on the storage policies, a result of authentication on the remote UE3, and a result of authentication on the remote UE4, refer to the foregoing descriptions of the possible implementations related to the remote UE1. Details are not described herein again.

For another example, when an identity of a remote UE5 is an IP address (for example, 2001:1ab0:4e11:48::13), for the remote UE5, a maximum storage capacity for data storage that is allowed by the relay UE is 100 MB, and maximum storage time for data storage that is allowed by the relay UE is 10 ms. In addition, a storage policy that is set by the relay UE for the remote UE5 is sending, after the maximum storage time is met, request information to the remote UE5, and correspondingly, the remote UE5 receives the request information.

Specifically, the request information is for requesting to execute a processing policy for data of the remote UE5, and the processing policy includes discarding the data of the remote UE5.

Optionally, in a possible implementation, after receiving the request information, the remote UE5 sends an ack message to the relay UE. The ack message indicates to execute the policy of discarding the data. In this case, after receiving the ack message, the relay UE discards the data of the remote UE5.

It should be noted that, for content of processing the data based on the storage policy and a result of authentication on the remote UE5, refer to the foregoing descriptions of the possible implementations related to the remote UE1. Details are not described herein again.

For another example, when an identity of a remote UE6 is an identity of another type, a storage policy that is set by the relay UE for the remote UE6 is directly discarding data of the remote UE6.

It should be noted that, for content of processing the data based on the storage policy and a result of authentication on the remote UE6, refer to the foregoing descriptions of the possible implementations related to the remote UE1. Details are not described herein again.

According to the technical solution in this embodiment of this application, the relay terminal device can process the data of the remote UE in a targeted manner based on the result of the authentication performed by the data network on the remote terminal device, to improve communication efficiency of the remote UE.

FIG. 3 is a schematic flowchart of a communication method 300 according to an embodiment of this application. As shown in FIG. 3, the method may include at least the following steps.

S310: A relay UE obtains a result of authentication performed by a data network on a remote UE.

It should be noted that S310 is similar to S220. For brevity, details are not described herein again in this application.

S320: When the result of the authentication is that the authentication succeeds, the relay UE sends a first message to the remote UE, and correspondingly, the remote UE receives the first message.

Specifically, the first message is for triggering the remote UE to send data. When the result of the authentication on the remote UE is that the authentication succeeds, the relay UE sends the first message to the remote UE, to trigger the remote UE to send the data. Correspondingly, after receiving the first message, the remote UE starts sending the data.

Optionally, in a possible implementation, the first message may be a direct communication accept (direct communication accept, DCA) message.

Specifically, when the result of the authentication on the remote UE is that the authentication succeeds, the relay UE sends the DCA message to the remote UE. The DCA message indicates that a direct communication connection between the relay UE and the remote UE is successfully established, and is for triggering the remote UE to send the data. Correspondingly, after receiving the DCA, the remote UE starts sending the data.

It should be noted that the first message being for triggering the remote terminal device to send the data may be understood as that, after the remote terminal device receives the first message, in other words, after the direct communication connection between the relay terminal device and the remote terminal device is successfully established, the remote terminal device may send the data to the relay terminal device when the remote terminal device needs to send the data.

Optionally, the DCA message may include indication information, and the indication information indicate that the authentication on the remote UE succeeds.

According to the technical solution of this application, the relay terminal device obtains the result of the authentication performed by the DN on the remote UE, and when the result of the authentication is that the authentication succeeds, sends, to the remote UE, the first message for triggering the remote UE to send the data. In this way, a problem that data transmission of the remote UE is not synchronized with authentication and authorization of the DN can be avoided, and the data of the remote UE can be normally transmitted to a DN side, so that communication efficiency of the remote UE is improved.

Optionally, in a possible implementation, before step S310 is performed, the method may further include: S301: The relay UE sends third indication information to the remote UE, and correspondingly, the remote UE receives the third indication information.

Specifically, the third indication information indicates the remote UE to avoid sending the data. The third indication information indicating the remote UE to avoid sending the data may be understood as that the third indication information may indicate the remote UE to keep silent; in this case, after receiving the third indication information, the remote UE keeps silent and does not start sending the data.

Optionally, in a possible implementation, before step S310 is performed, the method may further include: S302: The relay UE sends a DCA message to the remote UE, and correspondingly, the remote UE receives the DCA message. The DCA message may include the third indication information, and the third indication information indicates the remote UE to avoid sending the data.

It should be noted that, when the DCA message includes the third indication information, in this embodiment of this application, only step S302 may be performed; or when the DCA does not include the third indication information, in this embodiment of this application, step S301 and step S302 may be performed.

Optionally, in a possible implementation, the method may further include: S330: When the result of the authentication is that the authentication fails, the relay UE sends fifth indication information to the remote UE, and correspondingly, the remote UE receives the fifth indication information. The fifth indication information indicates the remote UE to perform a subsequent operation.

For example, after receiving the fifth indication information, the remote UE resends a direct communication request (direct communication request, DCR) message to the relay UE. Alternatively, after receiving the fifth indication information, the remote UE releases a PC5 connection with the relay UE. Alternatively, after receiving the fifth indication information, the remote UE attempts to establish a connection with another relay UE or another DN.

Optionally, in a possible implementation, when the relay UE does not receive, within a period of time indicated by a timer, the result that is of the authentication on the remote UE and that is sent by an SMF, in other words, when the relay UE does not obtain, within the period of time indicated by the timer, the result of the authentication performed by the DN on the remote UE, the relay UE sends the first message to the remote UE, and after receiving the first message, the remote UE starts sending the data. In this way, a "deadlock" problem caused by long-time data congestion of the remote UE due to a loss of the result of the authentication on the remote UE can be avoided.

According to the technical solution of this application, before obtaining the result of the authentication performed by the DN on the remote UE, the relay terminal device sends, to the remote UE, the indication information indicating the remote UE to avoid sending the data. When learning that the result of the authentication on the remote UE is that the authentication succeeds, the relay terminal device triggers the remote UE to send the data. In this way, it can be ensured that the data of the remote UE is successfully transmitted to the DN side, so that communication efficiency of the remote UE is improved.

Alternatively, when learning that the result of the authentication on the remote UE is that the authentication fails, the relay terminal device indicates the remote UE to perform a subsequent operation. In this way, a waste of transmission resources can be reduced.

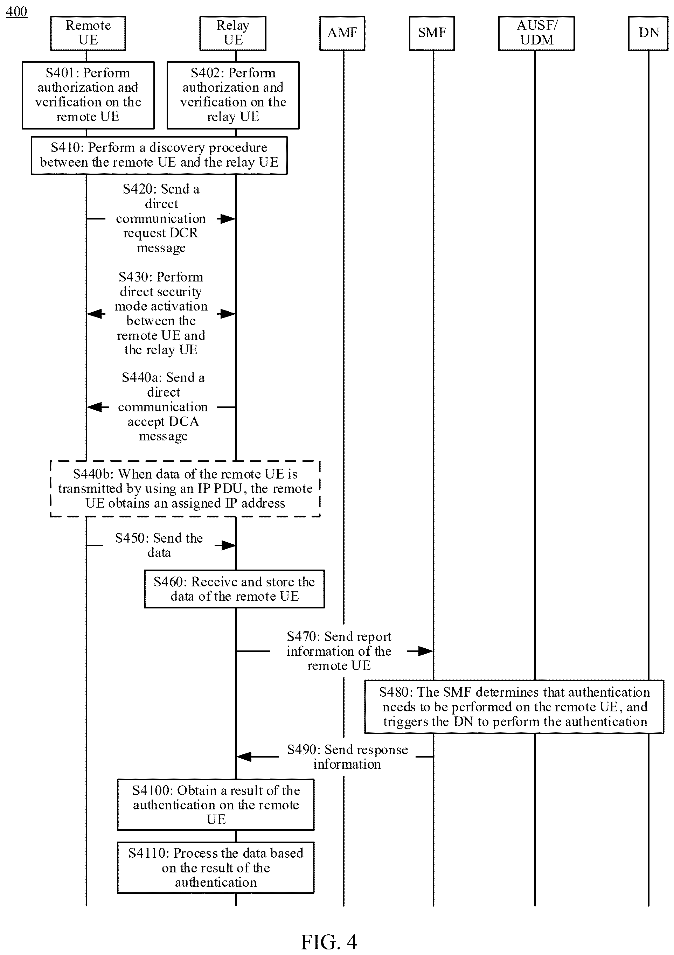

FIG. 4 is a schematic flowchart of a communication method 400 according to an embodiment of this application. As shown in FIG. 4, the method may include at least the following steps.

S401: Perform an authorization and verification process on a remote UE.

S402: Perform an authorization and verification process on a relay UE.

It should be noted that, for the authorization and verification processes performed on the remote UE and the relay UE, refer to an existing protocol. Details are not described herein.

S410: Perform a discovery procedure between the remote UE and the relay UE.

It should be noted that, for the discovery procedure performed between the remote UE and the relay UE, refer to an existing protocol. Details are not described herein.

S420: The remote UE sends a direct communication request DCR message to the relay UE, and correspondingly, the relay UE receives the DCR message.

Specifically, the DCR message is used by the remote UE to request the relay UE to establish a direct communication connection. The DCR message includes identity information of the remote UE. The identity information identifies an identity of the relay UE. The identity information may be an identity (identity, ID), a subscriber concealed identifier (subscription concealed identifier, SUCI), or a 5th generation user key identifier (5G ProSe remote user key ID, 5GPRUK ID). It should be understood that this is not limited in embodiments of this application.

S430: Perform a direct security mode command (direct security mode command, Direct SMC) procedure between the relay UE and the remote UE. It should be noted that, for a specific direct SMC procedure performed between the relay UE and the remote UE, refer to an existing protocol. Details are not described herein.

S440a: The relay UE sends a direct communication accept DCA message to the remote UE, and correspondingly, the remote UE receives the DCA message.

Specifically, after the direct SMC procedure is performed between the relay UE and the remote UE, the relay UE sends the direct communication accept DCA message to the remote UE. The DCA message indicates that the direct communication connection is successfully established between the relay UE and the remote UE.

It should be noted that, after step S440a is performed, the relay UE enables a data storage function, and stores data received from the remote UE.

S450: The remote UE sends the data to the relay UE, and correspondingly, the relay UE receives the data.

Specifically, when the remote UE receives the DCA message sent by the relay UE, the remote UE starts sending the data to the relay UE.

Optionally, in a possible implementation, before step S450 is performed, the method may further include: S440b: When the data of the remote UE is transmitted by using an IP PDU, the remote UE obtains an assigned IP address.

Specifically, a DHCP server may be used to assign an IP address. To be specific, the remote UE sends request information to the DHCP server, where the request information is for requesting to assign an IP address. Then the DHCP server returns the IP address to the remote UE. After receiving the IP address, the remote UE sends response information to the DHCP server, where the response information is for notifying the DHCP server that the IP address has been successfully received. In this case, the DHCP server records that the IP address has been successfully assigned to the remote UE. It should be noted that, for a specific procedure in which the DHCP server assigns the IP address to the remote UE, refer to an existing protocol. Details are not described herein in this application.

It should be understood that the DHCP server may be located on a DN side, or may be located on a relay UE side. This is not limited in embodiments of this application.

It should be further noted that, after step S440b is performed, in step S450, when the remote UE receives the DCA message sent by the relay UE and obtains the IP address of the relay UE, the remote UE starts sending data to the relay UE by using a PC5 interface.

It should be further noted that, when step S440b is not performed, after receiving the DCA message sent by the relay UE, the remote UE may alternatively perform data transmission without using an IP address. Specifically, in a conventional technology, there is transmission in an un-structed form, for example, transmission based on a Bluetooth protocol. The remote UE may send the data to the relay UE without requiring IP address assignment.

S460: The relay UE receives and stores the data from the remote UE.

It should be noted that S460 is similar to S210. For brevity, details are not described herein again in this application.

S470: The relay UE sends report information of the remote UE to an SMF, and correspondingly, the SMF receives the report information of the remote UE.

Specifically, the relay UE may directly send the report information of the remote UE to the SMF. The report information of the remote UE includes the identity information of the remote UE, and the report information of the remote UE is for notifying an SMF side that the remote UE sends the data by using a PDU session. Alternatively, the relay UE may indirectly send the report information of the remote UE to the SMF. To be specific, the relay UE may first send the report information of the remote UE to an AMF, and then the AMF sends the report information of the remote UE to the SMF. It should be understood that this is not limited in embodiments of this application.

The identity information may be an identifier ID, a SUCI, or a SGPRUK ID. Optionally, when step S440b is performed, the identity information may alternatively be IP address information. It should be understood that this is not limited in embodiments of this application.

It should be noted that the report information of the remote UE may alternatively carry a plurality of pieces of identity information, to identify a same remote UE.

For example, report information 1 of a remote UE1 may carry two pieces of identity information. For example, the report information 1 of the remote UE1 may carry both SUCI1 and an IP address 1. The two pieces of identity information may indicate that the remote UE1 whose identifier is SUCI1 is using the IP address 1, to better help a network side assist in identifying the identity of the remote UE.

It should be noted that the foregoing implementations related to the identity information are merely examples for description, and this is not limited in embodiments of this application.

It should be further noted that S470 may be performed after S460, or may be performed after S450. It should be understood that an execution sequence is not limited in embodiments of this application.

S480: The SMF determines that the remote UE needs an authentication procedure, initiates DN side authentication, and obtains a result of the authentication.

Specifically, after receiving the identity information of the remote UE, the SMF may determine, based on the identity information of the remote UE and subscription data on the network side, that the remote UE needs the authentication procedure, initiates the authentication to the DN side, and obtains the result of the authentication.

It should be noted that, for content in which the SMF determines that the remote UE needs the authentication procedure and the DN side performs the authentication procedure on the remote UE, refer to an existing protocol. Details are not described herein.

S490: The SMF sends response information to the relay UE, and correspondingly, the relay UE receives the response information.

Specifically, the SMF may send the response information by using a NAS downlink message. The response information indicates the result of the authentication on the remote UE. The result of the authentication on the remote UE includes that the authentication on the remote UE succeeds or the authentication on the remote UE fails.

S4100: The relay UE obtains the result of the authentication on the remote UE.

S4110: The relay UE processes the data based on the result of the authentication.

It should be noted that S4100 is similar to S220, and S4110 is similar to S230. For brevity, details are not described herein again in this application.

It should be further noted that, in step S4100, the relay UE receives the response information sent by the SMF, where the response information indicates the result of the authentication on the remote UE. To be specific, the relay UE obtains, based on the response information, the result of the authentication on the remote UE, and processes the data based on the result of the authentication.

Optionally, in a possible implementation, when the relay UE does not receive the response information within a period of time indicated by a timer, the relay UE sends the data of the remote UE to the DN.

Optionally, in a possible implementation, the response information may alternatively indicate that no authentication needs to be performed on the remote UE. In this case, after receiving the response information, the relay UE sends the data of the remote UE to the DN.

Optionally, in a possible implementation, before step S4100, the method may further include: The relay UE discards the data based on a storage policy corresponding to the remote UE.

It should be noted that, for descriptions of the storage policy, refer to the foregoing descriptions. For brevity, details are not described herein again in this application.

Optionally, in a possible implementation, if the relay UE does not receive the response information within a period of time indicated by the timer, the relay UE may perform periodic check to determine whether the relay UE has executed the storage policy described in Table 1 for the remote UE. If the storage policy has been executed (true), the relay UE sends indication information to a corresponding remote UE. The indication information indicates that the data of the remote UE has been discarded. Optionally, the indication information may include a discard indication message and a cause value.

According to the technical solution provided in this application, the relay UE can process the data of the remote UE in a targeted manner based on the result of the authentication performed by the DN on the remote UE, to improve communication efficiency of the remote UE.

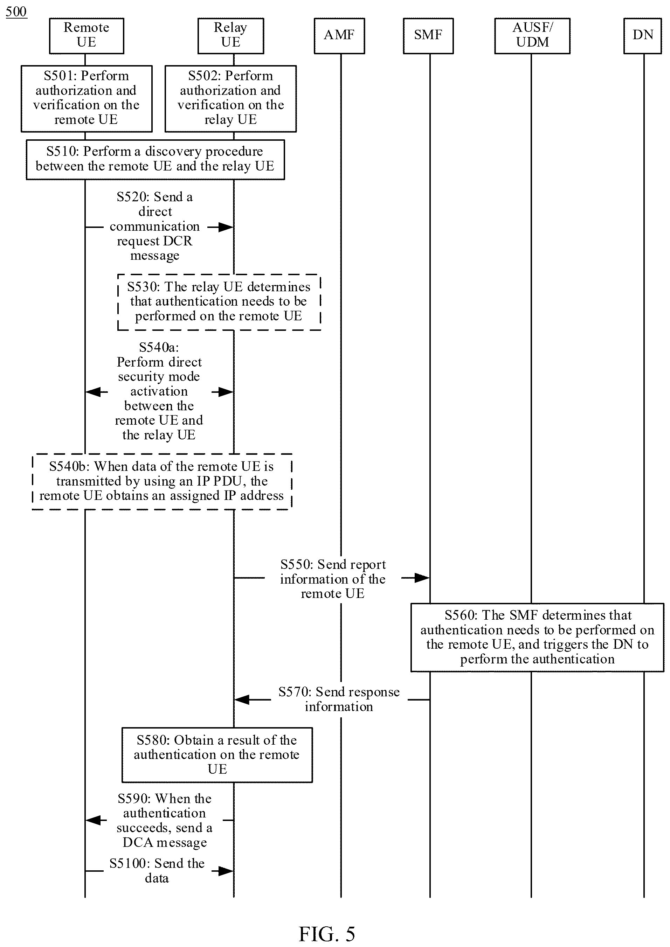

FIG. 5 is a schematic flowchart of a communication method 500 according to another embodiment of this application. As shown in FIG. 5, the method includes at least the following steps.

S501: Perform an authorization and verification process on a remote UE.

S502: Perform an authorization and verification process on a relay UE.

It should be noted that, for the authorization and verification processes performed on the remote UE and the relay UE, refer to an existing protocol. Details are not described herein.

S510: Perform a discovery procedure between the remote UE and the relay UE.

It should be noted that, for the discovery procedure performed between the remote UE and the relay UE, refer to an existing protocol. Details are not described herein.

S520: The remote UE sends a DCR message to the relay UE, and correspondingly, the relay UE receives the DCR message.

Specifically, the DCR message is used by the remote UE to request the relay UE to establish a direct communication connection. The DCR message includes identity information of the remote UE. The identity information identifies an identity of the relay UE. The identity information may be an ID, a SUCI, or a SGPRUK ID. It should be understood that this is not limited in embodiments of this application.

Optionally, in a possible implementation, the DCR message may further include historical data or a part of subscription data of the remote UE.

For example, the remote UE may send a part of the subscription data, for example, a PLMN ID, of the remote UE to the relay UE. Alternatively, the remote UE may send, to the relay UE, an ID of a DN to be accessed by the remote UE. For example, the ID may be information such as a domain name or an IP address of a DN of an RSC.

S530: The relay UE determines that authentication needs to be performed on the remote UE.

Optionally, in a possible implementation, when the DCR message includes the historical data or the part of the subscription data of the remote UE, the relay UE may determine, based on the subscription data, that the authentication needs to be performed on the remote UE.

Specifically, the relay UE may determine, based on a result of comparison between the subscription data of the remote UE and subscription data of the relay UE, that the authentication needs to be performed on the remote UE.

A PLMN ID is used as an example for description. The relay UE receives a PLMN ID1 sent by the remote UE. The first 3 bits of the PLMN ID1 are different from the first 3 bits of a PLMN ID2 of the relay UE. In this case, the relay UE determines, based on that no authentication needs to be performed on the relay UE, that the authentication needs to be performed on the remote UE.

A PLMN ID is used as an example for description. The relay UE receives a PLMN ID3 sent by the remote UE. The first 3 bits of the PLMN ID3 are the same as the first 3 bits of a PLMN ID4 of the relay UE. In this case, the relay UE learns, based on historical data of the relay UE, that authentication has been performed on the relay UE, and therefore determines that the authentication needs to be performed on the remote UE.

Optionally, in a possible implementation, the remote UE may alternatively send fourth indication information to the relay UE. The fourth indication information directly indicates that the authentication needs to be performed on the remote UE. In this case, the relay UE may accurately determine, based on the fourth indication information, that the authentication needs to be performed on the remote UE.

It should be noted that S530 is an optional step.

S540a: Perform a direct SMC procedure between the relay UE and the remote UE. It should be noted that, for a specific direct SMC procedure performed between the relay UE and the remote UE, refer to an existing protocol. Details are not described herein.

S550: The relay UE sends report information of the remote UE to an SMF, and correspondingly, the SMF receives the report information of the remote UE.

It should be noted that S550 is similar to S470. For brevity, details are not described herein again in this application.

Optionally, in a possible implementation, before step S550 is performed, the method may further include: S540b: When data of the remote UE is transmitted by using an IP PDU, the remote UE obtains an assigned IP address.

It should be noted that S540b is similar to S440b. For brevity, details are not described herein again in this application.

It should be further noted that S540b is an optional step.

Optionally, when step S540b is performed and a DHCP server that assigns an IP address is located on a relay UE side, or when step S540b is performed and the relay UE uses an IP address of the remote UE assigned by the relay UE, the relay UE performs step S550, to be specific, the relay UE sends the report information of the remote UE to the SMF. The report information is for triggering the SMF to initiate the authentication to a DN side. The report information may include the identity information of the remote UE, and the identity information may include IP address information.

Optionally, when step S540b is not performed, to be specific, the remote UE does not need to perform data transmission by using an IP address, in other words, an IP address does not need to be assigned, the relay UE performs step S550, to be specific, the relay UE sends the report information of the remote UE to the SMF. The report information is for triggering the SMF to initiate the authentication to a DN side. The report information may include the identity information of the remote UE.

S560: The SMF determines that the remote UE needs an authentication procedure, initiates DN side authentication, and obtains a result of the authentication.

It should be noted that S560 is similar to S480. For brevity, details are not described herein again in this application.

S570: The SMF sends response information to the relay UE, and correspondingly, the relay UE receives the response information. It should be noted that S570 is similar to S490. For brevity, details are not described herein again in this application.

S580: The relay UE obtains the result of the authentication on the remote UE. It should be noted that S580 is similar to S220. For brevity, details are not described herein again in this application.

S590: When the result of the authentication on the remote UE is that the authentication succeeds, the relay UE sends a direct communication accept DCA message to the remote UE, and correspondingly, the remote UE receives the DCA information.

Specifically, the DCA message indicates that the direct communication connection between the relay UE and the remote UE is successfully established, and is for triggering the remote UE to send the data. Correspondingly, after receiving the DCA, the remote UE starts sending the data.

Optionally, in a possible implementation, the DCA message may include indication information, and the indication information indicate that the authentication on the remote UE succeeds.

Optionally, in a possible implementation, when the result of the authentication on the remote UE is that the authentication fails, the relay UE sends a direct communication accept DCA message to the remote UE, and correspondingly, the remote UE receives the DCA information. The DCA message may include indication information, and the indication information indicate that the authentication on the remote UE fails.

It should be noted that, in a conventional technology, time of sending the report information of the remote UE is irrelevant to time of sending the DCA message. However, in this embodiment of this application, the relay UE may send the report information of the remote UE to the SMF in batches based on a requirement.

For example, the relay UE may simultaneously send report information of 10 remote UEs to the SMF; after the SMF determines, in batches, that authentication is performed on all of the 10 remote UEs, the SMF separately sends response information to the 10 remote UEs; and then, the relay UE sequentially sends DCA messages to the 10 remote UEs.

It should be further noted that, in this embodiment of this application, the time of sending the report information of the remote UE may alternatively be changed. For example, each time a direct SMC procedure between the remote UE and the relay UE is completed or each time an IP address assignment procedure is performed, the relay UE may send one piece of report information of the remote UE to the SMF. In this way, network efficiency can be improved to the maximum extent.

S5100: The remote UE sends the data to the relay UE, and correspondingly, the relay UE receives the data.

Optionally, in a possible implementation, the remote UE determines, based on the received DCA message, to send the data.

Optionally, in a possible implementation, the remote UE determines, based on the indication information included in the received DCA message, whether to start sending the data. For example, when the indication information indicates that the authentication succeeds, the remote UE sends the data; or when the indication information indicates that the authentication fails, the remote UE does not send the data.

According to the technical solution of this application, the relay terminal device obtains the result of the authentication performed by the DN on the remote UE, and when the result of the authentication is that the authentication succeeds, sends, to the remote UE, the message for triggering the remote UE to send the data. In this way, it can be ensured that the data of the remote UE can be successfully transmitted to the DN side, so that communication efficiency of the remote UE is improved.

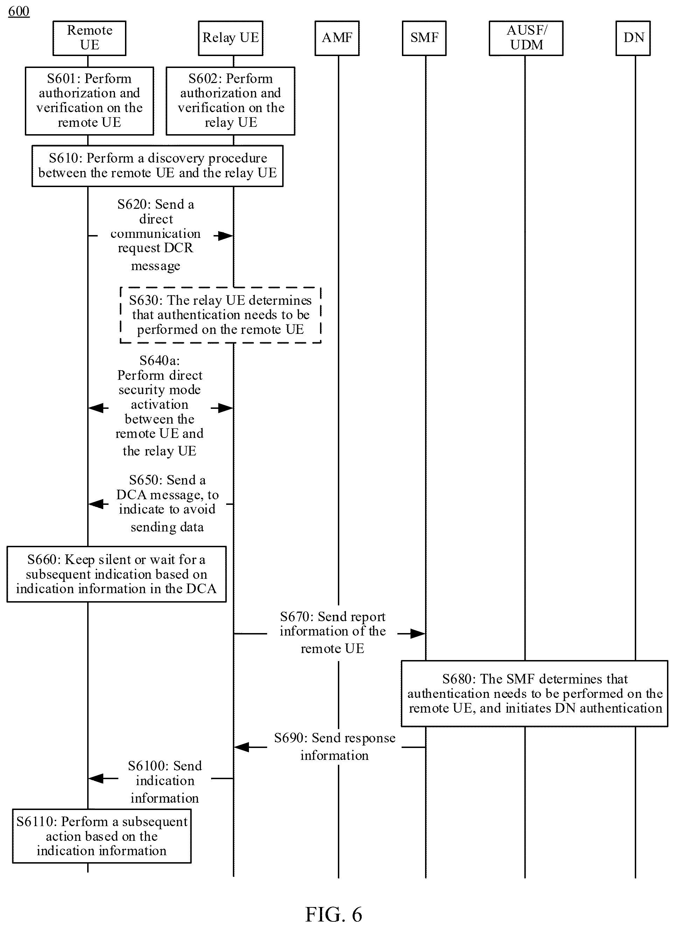

FIG. 6 is a schematic flowchart of a communication method 600 according to another embodiment of this application. As shown in FIG. 6, the method includes at least the following steps.

S601: Perform an authorization and verification process on a remote UE.

S602: Perform an authorization and verification process on a relay UE.

It should be noted that, for the authorization and verification processes performed on the remote UE and the relay UE, refer to an existing protocol. Details are not described herein.

S610: Perform a discovery procedure between the remote UE and the relay UE.

It should be noted that, for the discovery procedure performed between the remote UE and the relay UE, refer to an existing protocol. Details are not described herein.

S620: The remote UE sends a direct communication request DCR message to the relay UE, and correspondingly, the relay UE receives the DCR message.

It should be noted that S620 is similar to S420. For brevity, details are not described herein again in this application.

S630: The relay UE determines that authentication needs to be performed on the remote UE. It should be noted that S630 is similar to S430. For brevity, details are not described herein again in this application.

It should be noted that S630 is an optional step.

S640a: Perform a direct SMC procedure between the relay UE and the remote UE. It should be noted that, for a specific direct SMC procedure performed between the relay UE and the remote UE, refer to an existing protocol. Details are not described herein.

S650: The relay UE sends a direct communication accept DCA message to the remote UE, and correspondingly, the remote UE receives the DCA message.

S660: The remote UE keeps silent and waits for a subsequent indication of the relay UE based on indication information in the DCA message.

Specifically, the DCA information includes the indication information, and the indication information indicates the remote UE to avoid sending data. It may be understood that, in this case, the remote UE does not send any data.

S670: The relay UE sends report information of the remote UE to an SMF, and correspondingly, the SMF receives the report information of the remote UE.

It should be noted that S670 is similar to S470. For brevity, details are not described herein again in this application.

Optionally, in a possible implementation, before step S650 is performed, the method may further include: S640b: When data of the remote UE is transmitted by using an IP PDU, the remote UE obtains an assigned IP address.

It should be noted that S640b is similar to S440b. For brevity, details are not described herein again in this application.

It should be further noted that S640b is an optional step.

S680: The SMF determines that the remote UE needs an authentication procedure, initiates DN side authentication, and obtains a result of the authentication.

It should be noted that S680 is similar to S480. For brevity, details are not described herein again in this application.

S690: The SMF sends response information to the relay UE, and correspondingly, the relay UE receives the response information. It should be noted that S690 is similar to S490. For brevity, details are not described herein again in this application.

S6100: The relay UE sends indication information to the remote UE, and correspondingly, the remote UE receives the indication information.

S6110: The remote UE performs a corresponding operation based on the received indication information.

Optionally, in a possible implementation, when the response information indicates that the authentication on the remote UE succeeds, the relay UE sends indication information 1 to the remote UE. The indication information 1 is for triggering the remote UE to send the data. In this case, the remote UE starts sending the data, and correspondingly, the relay UE receives the data.

Optionally, in a possible implementation, when the response information indicates that the authentication on the remote UE fails, the relay UE sends indication information 2 to the remote UE. The indication information 2 indicates that secondary authentication on the remote UE fails. In this case, the relay UE may resend the DCR message to the relay UE. Alternatively, after receiving the indication information 2, the remote UE releases a PC5 connection with the relay UE. Alternatively, after receiving the indication information 2, the remote UE attempts to establish a connection with another relay UE or another DN.

Optionally, in a possible implementation, when the relay UE does not receive the response information within a period of time indicated by a timer, the relay UE sends indication information 3 to the remote UE. The indication information 3 indicates the remote UE to send the data. In this case, the remote UE starts sending the data, and correspondingly, the relay UE receives the data.

According to the technical solution of this application, before obtaining the result of the authentication performed by a DN on the remote UE, the relay terminal device sends third indication information to the remote UE, to indicate the remote UE to avoid sending the data. In this way, a waste of transmission resources can be avoided.

Embodiments described in this specification may be independent solutions, or may be combined based on internal logic. All of these solutions fall within the protection scope of this application.

It may be understood that in the foregoing method embodiments, the methods and the operations that are implemented by the apparatuses may alternatively be implemented by a component (for example, a chip or a circuit) of a corresponding device.

The foregoing mainly describes the solutions provided in embodiments of this application from a perspective of interaction between the apparatuses. It may be understood that, to implement the foregoing functions, each network element, such as a transmit end device or a receive end device, includes a corresponding hardware structure and/or software module for performing each function. A person skilled in the art may be aware that, in this application, units and algorithm steps with reference to the examples described in embodiments disclosed in this specification can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, functional modules of a transmit end device or a receive end device may be divided based on the foregoing method examples. For example, functional modules may be divided based on corresponding functions, or two or more functions may be integrated into one processing module. The integrated module may be implemented in a form of hardware, or may be implemented in a form of a software functional module. It should be noted that, in embodiments of this application, division into the modules is an example and is merely logical function division, and in an actual implementation, there may be another division manner. Descriptions are provided below by using an example in which each functional module is obtained through division corresponding to each function.

It should be understood that specific examples in embodiments of this application are merely intended to help a person skilled in the art better understand embodiments of this application, but are not intended to limit the scope of embodiments of this application.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

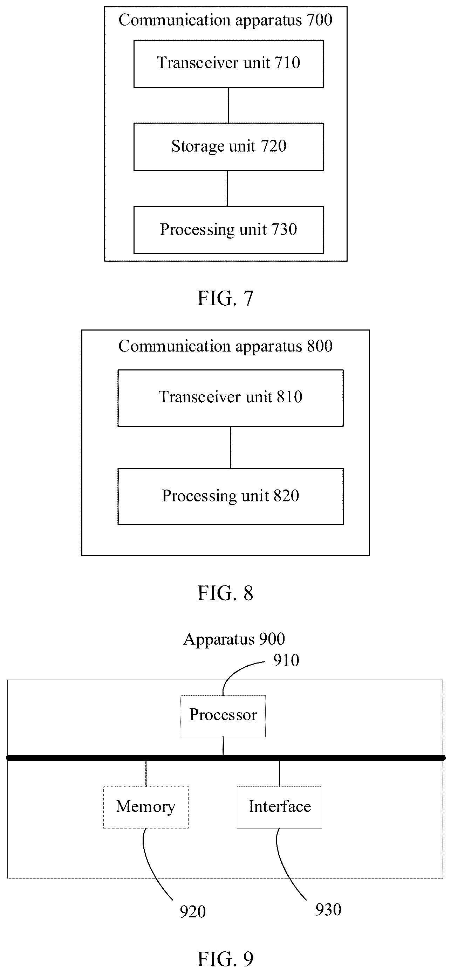

The foregoing describes in detail the methods provided in embodiments of this application with reference to FIG. 2 to FIG. 6. The following describes in detail apparatuses provided in embodiments of this application with reference to FIG. 7 to FIG. 9. It should be understood that descriptions of apparatus embodiments correspond to the descriptions of the method embodiments. Therefore, for content that is not described in detail, refer to the foregoing method embodiments. For brevity, details are not described herein again.

FIG. 7 is a block diagram of a communication apparatus 700 according to an embodiment of this application. It should be understood that the communication apparatus 700 includes a transceiver unit 710, a storage unit 720, and a processing unit 730.

The transceiver unit 710 is configured to receive data from a remote UE.

The storage unit 720 is configured to store the data from the remote UE.

The processing unit 730 is configured to obtain a result of authentication performed by a data network on the remote UE, where the data network is configured to provide a service for the remote UE via a relay UE.

The processing unit 730 is further configured to process the data based on the result of the authentication.

Optionally, in some embodiments, when the result of the authentication is that the authentication succeeds, the processing unit 730 is specifically configured to send the data to the data network.

Optionally, in some embodiments, when the result of the authentication is that the authentication fails, the processing unit 730 is specifically configured to discard the data.

Optionally, in some embodiments, before the result of the authentication performed by the data network on the remote UE is obtained, the processing unit 730 is further configured to discard the data based on a storage policy corresponding to the remote UE.

Before the data is sent to the data network, the transceiver unit 710 is further configured to send, to the remote UE, indication information indicating the remote UE to resend the data.

Optionally, in some embodiments, before the result of the authentication performed by the data network on the remote UE is obtained, the processing unit 730 is further configured to discard the data based on a storage policy corresponding to the remote UE.

The transceiver unit 710 is specifically configured to: when the result of the authentication is that the authentication fails, send, to the remote UE, indication information indicating that the data has been discarded.

Optionally, in some embodiments, the transceiver unit 710 is further configured to send, to the remote UE, indication information indicating a subsequent operation of the remote UE.

Optionally, in some embodiments, the storage policy includes any one of the following: discarding the data after a maximum storage capacity is met; discarding the data after maximum storage time is met; and requesting, after maximum storage time is met, the remote UE to indicate a processing policy for the data, where the processing policy includes discarding the data.

FIG. 8 is a block diagram of a communication apparatus 800 according to an embodiment of this application. It should be understood that the communication apparatus 800 includes a transceiver unit 810 and a processing unit 820.

In a first embodiment, the communication apparatus is configured to implement corresponding steps in the foregoing embodiments.

The processing unit 820 is configured to obtain a result of authentication performed by a data network on a remote UE, where the data network is configured to provide a service for the remote UE via a relay UE.

The transceiver unit 810 is configured to: when the result of the authentication is that the authentication succeeds, send a first message to the remote UE, where the first message indicates that a direct communication connection between the relay UE and the remote UE is successfully established, and the first message is further for triggering the remote UE to send data.

Optionally, in some embodiments, before the result of the authentication performed by the data network on the remote UE is obtained, the transceiver unit 810 is further configured to send, to the remote UE, indication information indicating the remote UE to avoid sending the data.

Optionally, in some embodiments, before the result of the authentication performed by the data network on the remote UE is obtained, the processing unit 820 is further configured to determine that the authentication needs to be performed on the remote UE.

Optionally, in some embodiments, after it is determined that the authentication needs to be performed on the remote UE, the transceiver unit 810 is further configured to trigger a session management function network element to initiate the authentication. The processing unit 820 is specifically configured to receive, from the session management function network element, the result of the authentication performed by the data network on the remote UE.

Optionally, in some embodiments, before it is determined that the authentication needs to be performed on the remote UE, the processing unit 820 is further configured to obtain subscription data of the remote UE.

The processing unit 820 is specifically configured to determine, based on the subscription data, that the authentication needs to be performed on the remote UE.

Optionally, in some embodiments, the processing unit 820 is specifically configured to determine, based on a result of comparison between the subscription data and subscription data of the relay UE, that the authentication needs to be performed on the remote UE.

Optionally, in some embodiments, before it is determined that the authentication needs to be performed on the remote UE, the transceiver unit 810 is further configured to receive, from the remote UE, indication information indicating that the authentication needs to be performed on the remote UE.

The processing unit 820 is specifically configured to determine, based on the indication information indicating that the authentication needs to be performed on the remote UE, that the authentication needs to be performed on the remote UE.

In a second embodiment, the communication apparatus is configured to implement corresponding steps in the foregoing embodiments.

The transceiver unit 810 is configured to send, to a remote UE, indication information indicating the remote UE to avoid sending data.

The processing unit 820 is configured to obtain a result of authentication performed by a data network on the remote UE, where the data network is configured to provide a service for the remote UE via a relay UE.

The transceiver unit 810 is further configured to: when the result of the authentication is that the authentication fails, send, to the remote UE, indication information indicating the remote UE to perform a subsequent operation.

Optionally, in some embodiments, before the result of the authentication performed by the data network on the remote UE is obtained, the processing unit 820 is further configured to determine that the authentication needs to be performed on the remote UE.

Optionally, in some embodiments, after it is determined that the authentication needs to be performed on the remote UE, the processing unit 820 is further configured to trigger a session management function network element to initiate the authentication. The processing unit 820 is specifically configured to receive, from the session management function network element, the result of the authentication performed by the data network on the remote UE.

Optionally, in some embodiments, before it is determined that the authentication needs to be performed on the remote UE, the processing unit 820 is further configured to obtain subscription data of the remote UE.

The processing unit 820 is specifically configured to determine, based on the subscription data, that the authentication needs to be performed on the remote UE.

Optionally, in some embodiments, the processing unit 820 is specifically configured to determine, based on a result of comparison between the subscription data and subscription data of the relay UE, that the authentication needs to be performed on the remote UE.

Optionally, in some embodiments, before it is determined that the authentication needs to be performed on the remote UE, the transceiver unit 810 is further configured to receive, from the remote UE, indication information indicating that the authentication needs to be performed on the remote UE.

The processing unit 820 is specifically configured to determine, based on the indication information indicating that the authentication needs to be performed on the remote UE, that the authentication needs to be performed on the remote UE.

It should be understood that division into the units in the foregoing communication apparatus is merely logical function division. In an actual implementation, all or some of the units may be integrated into one physical entity, or may be physically separated. In addition, all of the units in the communication apparatus may be implemented in a form of invoking software by a processing element or may be implemented in a form of hardware, or some of the units may be implemented in a form of invoking software by a processing element, and some of the units may be implemented in a form of hardware. For example, each unit may be a separately disposed processing element, or may be implemented by being integrated into a chip of the communication apparatus. In addition, each unit may be stored in a memory in a form of a program, and a function of the unit is invoked and executed by a processing element of the communication apparatus. In addition, all or some of the units may be integrated together, or may be implemented independently. The processing element herein may also be referred to as a processor, and may be an integrated circuit having a signal processing capability. During implementation, the steps of the foregoing methods or the foregoing units may be implemented by a hardware integrated logic circuit in a processor element, or may be implemented in a form of invoking software by the processing element.

In an example, the unit in any one of the foregoing communication apparatuses may be one or more integrated circuits configured to implement the foregoing methods, for example, one or more application-specific integrated circuits (application-specific integrated circuit, ASIC), or one or more microprocessors (digital signal processor, DSP), or one or more field programmable gate arrays (field programmable gate array, FPGA), or a combination of at least two of these integrated circuit forms. For another example, when the units in the communication apparatus may be implemented in a form of scheduling a program by a processing element, the processing element may be a general-purpose processor, for example, a central processing unit (central processing unit, CPU) or another processor that can invoke a program. For another example, the units may be integrated and implemented in a form of a system-on-a-chip (system-on-a-chip, SoC).

FIG. 9 is a diagram of an apparatus according to an embodiment of this application. The apparatus is configured to implement operations of the communication apparatuses in the foregoing embodiments. As shown in FIG. 9, the apparatus includes a processor 910 and an interface 930. The processor 910 is coupled to the interface 930. The interface 930 is configured to communicate with another device. The interface 930 may be a transceiver or an input/output interface. The interface 930 may be, for example, an interface circuit. Optionally, the communication apparatus may further include a memory 920, configured to store instructions executed by the processor 910, store input data for the processor 910 to run the instructions, or store data generated after the processor 910 runs the instructions.

The methods performed by the communication apparatuses in the foregoing embodiments may be implemented by the processor 910 by invoking a program stored in a memory (which may be the memory 920 in the communication apparatus, or may be an external memory). In other words, the communication apparatus may include the processor 910. The processor 910 invokes the program in the memory, to perform the method performed by the communication apparatus in the foregoing method embodiments. The processor herein may be an integrated circuit having a signal processing capability, for example, a CPU. The communication apparatus may be implemented by one or more integrated circuits configured to implement the foregoing methods, for example, one or more ASICs, one or more microprocessors DSPs, one or more FPGAs, or a combination of at least two of the integrated circuit forms. Alternatively, the foregoing implementations may be combined.

Specifically, functions/implementation processes of the units in FIG. 7 and FIG. 8 may be implemented by the processor 910 in the apparatus 900 shown in FIG. 9 by invoking computer-executable instructions stored in the memory 920. Alternatively, functions/implementation processes of the processing units in FIG. 7 and FIG. 8 may be implemented by the processor 910 in the apparatus 900 shown in FIG. 9 by invoking computer-executable instructions stored in the memory 920, and functions/implementation processes of the transceiver units in FIG. 7 and FIG. 8 may be implemented by the interface 930 in the apparatus 900 shown in FIG. 9.

It should be understood that the processing unit in the apparatus includes a processor. The processor is coupled to a memory. The memory is configured to store a computer program or instructions and/or data. The processor is configured to execute the computer program or the instructions and/or the data stored in the memory, to perform the methods in the foregoing method embodiments.

An embodiment of this application further provides a communication system. The communication system includes the foregoing communication apparatus.

An embodiment of this application further provides a computer-readable storage medium configured to store computer program code. The computer program includes instructions for performing the communication methods in embodiments of this application in the foregoing methods. The readable medium may be a read-only memory (read-only memory, ROM) or a random access memory (random access memory, RAM). This is not limited in embodiments of this application.

This application further provides a computer program product. The computer program product includes instructions. When the instructions are executed, a communication apparatus is enabled to perform operations corresponding to the foregoing methods.

An embodiment of this application further provides a system chip. The system chip includes a processing unit and a communication unit. The processing unit may be, for example, a processor. The communication unit may be, for example, an input/output interface, a pin, a circuit, or the like. The processing unit may execute computer instructions, to enable a chip in a communication apparatus to perform any communication method provided in the foregoing embodiments of this application.

Optionally, the computer instructions are stored in a storage unit.

Optionally, the storage unit is a storage unit in the chip, for example, a register or a cache. Alternatively, the storage unit may be a storage unit that is in a terminal and that is located outside the chip, for example, a ROM or another type of static storage device that can store static information and instructions, or a RAM. Any processor mentioned above may be a CPU, a microprocessor, an ASIC, or one or more integrated circuits configured to control program execution of the foregoing feedback information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to a same device.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through examples but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory of the systems and methods described in this specification includes but is not limited to these and any other proper types of memories.

It should be further understood that various numerical symbols in this specification are differentiated merely for ease of description, but are not used to limit the scope of embodiments of this application.

It should be understood that the term "and/or" in this specification describes only an association relationship between associated objects and indicates that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments. The execution sequences of the processes should be determined based on functions and internal logic of the processes, and should not be construed as any limitation on the implementation processes of embodiments of this application.

A person of ordinary skill in the art may be aware that, units and algorithm steps with reference to the examples described in embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and in an actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual needs to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is performed by a relay terminal device, and the method comprises:
receiving and storing data from a remote terminal device;
obtaining a result of authentication performed by a data network on the remote terminal device, wherein the data network is configured to provide a service for the remote terminal device via the relay terminal device; and
processing the data based on the result of the authentication.

2. The method according to claim 1, wherein when the result of the authentication is that the authentication succeeds, processing the data based on the result of the authentication comprises:
sending the data to the data network.

3. The method according to claim 1, wherein when the result of the authentication is that the authentication fails, processing the data based on the result of the authentication comprises:
discarding the data.

4. The method according to claim 2, wherein before obtaining the result of the authentication performed by the data network on the remote terminal device, the method further comprises:
discarding the data based on a storage policy corresponding to the remote terminal device; and
before sending the data to the data network, the method further comprises:
sending, to the remote terminal device, indication information indicating the remote terminal device to resend the data.

5. The method according to claim 1, wherein before obtaining the result of the authentication performed by the data network on the remote terminal device, the method further comprises:
discarding the data based on a storage policy corresponding to the remote terminal device; and
processing the data based on the result of the authentication comprises:
when the result of the authentication is that the authentication fails, sending, to the remote terminal device, indication information indicating that the data has been discarded.

6. The method according to claim 5, wherein the method further comprises:
sending, to the remote terminal device, indication information indicating a subsequent operation of the remote terminal device.

7. The method according to any one of claims 4 to 6, wherein the storage policy comprises any one of the following:
discarding the data after a maximum storage capacity is met;
discarding the data after maximum storage time is met; and
requesting, after maximum storage time is met, the remote terminal device to indicate a processing policy for the data, wherein the processing policy comprises discarding the data.

8. A communication method, wherein the method is performed by a relay terminal device, and the method comprises:
obtaining a result of authentication performed by a data network on a remote terminal device, wherein the data network is configured to provide a service for the remote terminal device via the relay terminal device; and
when the result of the authentication is that the authentication succeeds, sending a first message to the remote terminal device, wherein the first message indicates that a direct communication connection between the relay terminal device and the remote terminal device is successfully established, and the first message is further for triggering the remote terminal device to send data.

9. The method according to claim 8, wherein before obtaining the result of the authentication performed by the data network on the remote terminal device, the method further comprises:
determining that the authentication needs to be performed on the remote terminal device.

10. The method according to claim 9, wherein after determining that the authentication needs to be performed on the remote terminal device, the method further comprises:
triggering a session management function network element to initiate the authentication; and
obtaining the result of the authentication performed by the data network on the remote terminal device comprises:
receiving, from the session management function network element, the result of the authentication performed by the data network on the remote terminal device.

11. The method according to claim 9, wherein before determining that the authentication needs to be performed on the remote terminal device, the method further comprises:
obtaining subscription data of the remote terminal device; and
determining that the authentication needs to be performed on the remote terminal device comprises:
determining, based on the subscription data, that the authentication needs to be performed on the remote terminal device.

12. The method according to claim 11, wherein determining, based on the subscription data, that the authentication needs to be performed on the remote terminal device comprises:
determine, based on a result of comparison between the subscription data and subscription data of the relay terminal device, that the authentication needs to be performed on the remote terminal device.

13. The method according to claim 9, wherein before determining that the authentication needs to be performed on the remote terminal device, the method further comprises:
receiving, from the remote terminal device, indication information indicating that the authentication needs to be performed on the remote terminal device; and
determining that the authentication needs to be performed on the remote terminal device comprises:
determining, based on the indication information indicating that the authentication needs to be performed on the remote terminal device, that the authentication needs to be performed on the remote terminal device.

14. A communication method, wherein the method comprises:
sending, by a remote terminal device, data to a relay terminal device;
receiving and storing, by the relay terminal device, the data from the remote terminal device;
obtaining, by the relay terminal device, a result of authentication performed by a data network on the remote terminal device, wherein the data network is configured to provide a service for the remote terminal device via the relay terminal device; and
processing, by the relay terminal device, the data based on the result of the authentication.

15. The method according to claim 14, wherein when the result of the authentication is that the authentication succeeds, processing, by the relay terminal device, the data based on the result of the authentication comprises:
sending, by the relay terminal device, the data to the data network.

16. The method according to claim 14, wherein when the result of the authentication is that the authentication fails, processing, by the relay terminal device, the data based on the result of the authentication comprises:
discarding the data.

17. The method according to claim 15, wherein before obtaining, by the relay terminal device, the result of the authentication performed by the data network on the remote terminal device, the method further comprises:
discarding, by the relay terminal device, the data based on a storage policy corresponding to the remote terminal device; and
before sending, by the relay terminal device, the data to the data network, the method further comprises:
sending, by the relay terminal device to the remote terminal device, indication information indicating the remote terminal device to resend the data; and
resending, by the remote terminal device, the data to the relay terminal device.

18. The method according to claim 14, wherein before obtaining, by the relay terminal device, the result of the authentication performed by the data network on the remote terminal device, the method further comprises:
discarding, by the relay terminal device, the data based on a storage policy corresponding to the remote terminal device; and
processing, by the relay terminal device, the data based on the result of the authentication comprises:
when the result of the authentication is that the authentication fails, sending, by the relay terminal device to the remote terminal device, indication information indicating that the data has been discarded.

19. A communication method, wherein the method comprises:
obtaining, by a relay terminal device, a result of authentication performed by a data network on a remote terminal device, wherein the data network is configured to provide a service for the remote terminal device via the relay terminal device;
when the result of the authentication is that the authentication succeeds, sending, by the relay terminal device, a first message to the remote terminal device, wherein the first message indicates that a direct communication connection between the relay terminal device and the remote terminal device is successfully established; and
sending, by the remote terminal device, data to the relay terminal device.

20. The method according to claim 19, wherein before obtaining, by the relay terminal device, the result of the authentication performed by the data network on the remote terminal device, the method further comprises:
determining, by the relay terminal device, that the authentication needs to be performed on the remote terminal device.

21. The method according to claim 20, wherein after determining, by the relay terminal device, that the authentication needs to be performed on the remote terminal device, the method further comprises:
triggering, by the relay terminal device, a session management function network element to initiate the authentication; and
obtaining, by the relay terminal device, the result of the authentication performed by the data network on the remote terminal device comprises:
receiving, by the relay terminal device from the session management function network element, the result of the authentication performed by the data network on the remote terminal device.

22. A communication apparatus, comprising a unit configured to perform the method according to any one of claims 1 to 13.

23. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 13.

24. A communication system, comprising a relay terminal device and a remote terminal device, wherein
the relay terminal device is configured to perform the method according to any one of claims 1 to 7; and
the remote terminal device is configured to send data to the relay terminal device.

25. A communication system, comprising a relay terminal device and a remote terminal device, wherein
the relay terminal device is configured to perform the method according to any one of claims 8 to 13; and
the remote terminal device is configured to: receive a first message from the relay terminal device, and send data to the relay terminal device.

26. A computer-readable storage medium, wherein the computer-readable storage medium stores a computer program, and when the computer program is run, the computer is enabled to perform the method according to any one of claims 1 to 13.

27. A computer program product, wherein the computer program product comprises a computer program, and when the computer program is run, the method according to any one of claims 1 to 13 is performed.

28. A chip system, comprising a processor, configured to invoke a computer program from a memory and run the computer program, to enable a communication apparatus on which the chip system is installed to perform the method according to any one of claims 1 to 13.
